Europäisches Patentamt

European Patent Office

Office européen des brevets

(11) Publication number: **0 190 784 B1**

## EUROPEAN PATENT SPECIFICATION

(45) Date of publication of patent specification: 27.03.91

(51) Int. Cl.5: **A01F 15/10, A01D 90/02**

(21) Application number: 86200083.3

(22) Date of filing: 28.12.84

(60) Publication number of the earlier application in accordance with Art.76 EPC: **0 148 537**

(54) Baler feeder mechanism.

(30) Priority: 09.01.84 US 569438

(43) Date of publication of application:
13.08.86 Bulletin 86/33

(45) Publication of the grant of the patent:
27.03.91 Bulletin 91/13

(84) Designated Contracting States:
DE FR GB

(56) References cited:
BE-A- 644 906          DE-A- 1 507 380
DE-A- 1 582 447        DE-B- 1 163 072
GB-A- 633 887          GB-A- 1 130 761
GB-A- 2 059 869        US-A- 4 034 543

(73) Proprietor: **FORD NEW HOLLAND N.V.**
**Leon Claeysstraat 3a**
**B-8210 Zedelgem(BE)**

(72) Inventor: **Naaktgeboren, Adrianus**
**Vogelwikkestraat 7**
**B-8211 Veldegem (Zedelgem)(BE)**

(74) Representative: **Vandenbroucke, Alberic T.J.**
**et al**
**FORD NEW HOLLAND N.V. Leon Claeysstraat**
**3A**
**B-8210 Zedelgem(BE)**

Rank Xerox (UK) Business Services

## Description

This invention relates generally to agricultural balers and, in particular, to feeder mechanisms for such balers.

In a known, so-called large baler that includes a duct communicating at one end with an inlet opening in a bale case, one feeder mechanism is provided for packing crop material into the duct and another feeder mechanism is provided for stuffing crop material from the duct into the bale case via the inlet opening. US-A-4.034.543 discloses a baler of this type in which the feeder mechanism for packing is comprised of a plurality of fingers that extend from and retract into a rotatable drum, and the feeder mechanism for stuffing is comprised of a series of tines that oscillate in a kidney-shaped path of travel. Another baler of this type is disclosed in US-A-4.372.104 where the feeder mechanism for packing includes a plurality of prongs that move in an elliptical path of travel, and the feeder mechanism for stuffing includes a series of plates mounted on a rotatable tube. US-A-4.375.786 discloses a further baler of this type where the feeder mechanism for packing is formed by pushing members mounted on a rotatable disc, and the feeder mechanism for stuffing is formed by a rotatable flap member.

All the prior art feeder means referred to hereabove are especially adapted for use on so-called large square balers. As is generally known in the art, the conventional square balers widely used since many decades, typically make haybales weighing in the range of 20 to 35 kg. In contrast therewith the more recently introduced large square balers normally produce haybales weighing in the range of 200 to 400 kg. Some really giant square balers even are capable of producing haybales of up to one ton.

All the feeder mechanisms referred to hereabove have packer means and stuffer means which are spaced apart lengthwise of the feeder channel or duct and which are more or less independent from each other. Such multiple feeder means thus are quite voluminous and cumbersome and have many components, which in turn has a negative effect on the cost of the baler. For the same reasons the feeder channel is rather elongated, which possibly may present a problem under certain operating conditions to the extent that less than desirable feeding characteristics are obtained.

Some of the prior art packer and stuffer means together forming the multiple feeder means are fairly complicated in design and furthermore operate joltingly. Also the drive means therefore are quite complicated in design.

Balers of the type as described above usually have, at a location forwardly of the feed duct, a pick-up device which is wider than said feed duct and the bale case. Conveyor means, such as an auger structure, may be associated with the pick-up device to transversely converge picked-up crop material and to present this material to the feeder means. This auger structure may extend across the full width of the pick-up device and comprise a central tubular portion equiped with e.g. retractable fingers and transversely spaced apart, oppositely directed auger flights mounted on tubular body portions. The spaced apart auger flights are provided in locations outboard of the lateral confines of the feed duct and are operable to converge crop material from said outboard locations toward the central tubular portion; the latter being operable to present crop material received in the central location to the feeder means. This central portion of the auger structure and indeed also the spaced apart auger flights of said auger structure are, in effect, additional feeder means which further complicate the entire machine and make the path of the crop material through the machine longer.

While known balers of the type as described hereabove, always have been equiped with complicated feeder means including multiple feeder elements, single rotary feeder means nevertheless are known already in the art of e.g. self-loading forage wagons such as shown in GB-A-1.130.761. However, self-loading forage wagons are very much less demanding to the feeder means used therein than the type of balers subject of the present invention.

Starting from US-A-4.375.786, it is the object of the present invention to provide an agricultural baler with a simple and compact feeder mechanism adapted to stuff material from a feeder channel into the bale case on the one hand, and to provide a feeder mechanism with fewer components and which, moreover is able to operate smoothly and continuously on the other hand. The feeder according to the invention is particularly adapted for use on the so-called large square balers as identified above, although its application on conventional square balers equally may be advantageous, especially for increasing the capacity of such balers.

According to the present invention an agricultural baler is provided which comprises a bale case which extends fore-and-aft with respect to the intended direction of movement of the baler and which has a generally rectangular cross section defined by a top wall, a bottom wall and transversely opposite side walls; the bottom wall having a generally downwardly facing inlet opening formed therein. A plunger is mounted for reciprocational movement back-and-forth across the inlet opening within the bale case for compressing successive charges of crop material received therein through said inlet opening to form a bale. A generally arcuately shaped feed duct of a generally rectangular cross section and delimited by transversely spaced apart side walls and transversely extending, spaced apart inner and outer curved walls, communicates at its upper end with the inlet opening in the bale case and curves downwardly and forwardly therefrom and terminates in a lower, forwardly facing, open crop receiving mouth. Said feed duct further has a width which generally corresponds to the width of the bale case, and a length which is at least as great as the dimension of the bale case between the top wall and the bottom wall thereof. A pick-up device of a width exceeding the width of the bale case and the feed duct is positioned forwardly of the feed duct mouth for picking up crop material from the ground as the baler moves forwardly in a crop field. A pair of laterally spaced apart conveyors are positioned rearwardly of the pick-up device at locations laterally outboard of the lateral confines of the feed duct mouth and inwardly terminate adjacent said lateral confines of the feed duct mouth. These conveyors define a deposit zone therebetween and immediately in front of the feed duct mouth and are adapted to receive picked up crop material at said laterally outboard locations from the pick-up device and to converge the same inwardly to said deposit zone aligned fore-and-aft with the feed duct mouth. Feed means are provided which include a set of crop engaging feeder tines disposed at spaced apart locations across the transverse width of the feed duct. Said feeder tines, in use, are generally rotatable around an axis positioned generally forwardly of the bale case inlet opening at a location between the bale case bottom wall and the level of the feed duct mouth and penetrate into the feed duct through slots provided in the inner wall thereof. Said feeder tines are cooperable with the feed duct for stuffing successive charges of crop material from the feed duct into the bale case in timed sequence to the reciprocation of the plunger. Said feeder tines, in use, turn through 360° of revolution along a course passing downwardly through the deposit zone, into the feed duct mouth, rearwardly and upwardly through the feed duct and up into the bale case for stuffing a charge of crop material into said bale case and finally back to the deposit zone and the feed duct mouth for attacking a next charge of crop material.

The baler as defined above is characterized in that the course of the feeder tines extends through the deposit zone into the vicinity of the pick-up device for said feeder tines to receive on the one hand, directly from said pick-up device and without the intermediary of any further feed means, crop material picked up by said pick-up device at a location laterally inboard of the lateral confines of the feed duct mouth and, on the other hand, directly from the transverse conveyors and again without the intermediary of any further feed means, crop material deposited by said conveyors within the deposit zone.

In other words, the invention provides a bottom fed baler with a single rotary feeder which is operable to deliver successive charges of crop material from the pick-up device to the bale case. The essentially radially extending feeder tines rotate through 360 degrees of travel in one complete revolution, sweeping downwardly and rearwardly through the deposit zone into the mouth of the duct, upwardly and rearwardly through the same, and up into and forwardly through the bale case before returning back down to the deposit zone and the mouth of the duct for the next charge. This is in contrast with the prior art structures where the feed means comprise a plurality of elements which are spaced apart lengthwise of the feed duct to convey crop material from the mouth of the feed duct into the bale case. Said otherwise, each individual element of the prior art composite feeder mechanism spans only a portion of the feed duct while that the single rotary feeder according to the present invention spans the full length of the feed duct.

Preferably the movement of the feeder tines along said course of 360 degrees of revolution in said direction, is effectively a resultant movement composed of two generally opposite rotational movements. More particularly the feeder tines are rotatable in one direction about a first axis and in the opposite direction about a second axis which is offset relative to the first axis. Generally stationary means are provided co-axially with the first axis and drive transmission means drivingly couple the feeder tines to the generally stationary means. The arrangement is such that, as the feeder tines are rotated around the first axis and the generally stationary means co-axially therewith in the one direction, the drive transmission means drivingly coupling the feeder to the generally stationary means cause said feeder tines to rotate in the opposite direction around the second axis.

The transmission ratio of the drive transmission means drivingly coupling the feeder tines to the generally stationary means is such that, for a given angular displacement of the feeder tines in the one direction around the first axis, the feeder tines are angularly displaced in the opposite direction around the second axis through an angle corresponding to half the given angular displacement around the first axis. The arrangement is such that the feeder tines make a resultant movement in the one direction along said course which is generally apple shaped.

In one preferred embodiment, the feed means comprise a pair of transversely spaced apart shaft assemblies which are aligned to each other and which extend co-axially with the first axis. A crank means is coupled at one end to each of the shaft assemblies at the end thereof facing the opposite shaft assembly. Shaft means are supported by the crank means at the other ends thereof and co-axially with the second axis. The shaft means support the feeder tines in a manner so as to be rotatable around the second axis.

In one preferred embodiment, the shaft means are rotatably mounted on the crank means with the feeder tines being fixedly coupled to the shaft means. The generally stationary means are formed by a first sprocket fixedly secured to the frame. The drive transmission means drivingly coupling the feeder tines to the stationary means are formed by a further sprocket fixedly secured to the shaft means and a chain drivingly extending around the first and further sprockets. The further sprocket has twice as many teeth as the first sprocket. Drive means are operatively coupled to one of the shaft assemblies for driving the feed means in the first direction around the first axis.

A generally U-shaped counterbalancing member is fixedly connected to the shaft assemblies at a position generally diametrically opposite to the shaft means to counterbalance the feeder tines and the shaft means.

The feed duct is generally circularly curved in shape with the center of curvature being either coincident with the first axis or positioned proximate thereto. During operation, the feeder tines sweep, as already said, through the feed duct in the direction from the lower end thereof to the upper end thereof. During this sweeping movement, the feeder tines are operable to precompress crop material in the feed duct prior to stuffing a charge of crop material from said feed duct into the bale case.

The single rotary feeder as described preferably also comprises a further crop-engaging structure which, in operation, also turns through 360 degrees of revolution along a course leading through the deposit zone into the feed duct mouth and rearwardly and up through the duct for transferring crop material from the deposit zone and the mouth into the duct, and back down to the deposit zone and the mouth for attacking a next amount of crop material; the first and further crop-engaging structures being movable around a common axis.

A baler in accordance with the present invention will now be described in greater detail by way of example, with reference to the accompanying drawings, in which :

Fig. 1 is a partial side elevational view of a baler embodying the preferred embodiment of the feed means of the present invention;

Fig. 2 is an enlarged sectional view taken along lines 2-2 in Fig. 1;

Fig. 3 is a sectional view taken along lines 3-3 in Fig. 2; and

Figs. 4-11 are somewhat schematic views taken at various stages during the operation of the baler of Fig. 1.

In the following description, right hand and left hand references are determined by standing at the rear of the machine and facing in a direction of forward travel. Also, in the following description, it is to be understood that such terms as "forward", "rearward", "left", "right", "upwardly",etc. are words of convenience and are not to be construed as limiting terms.

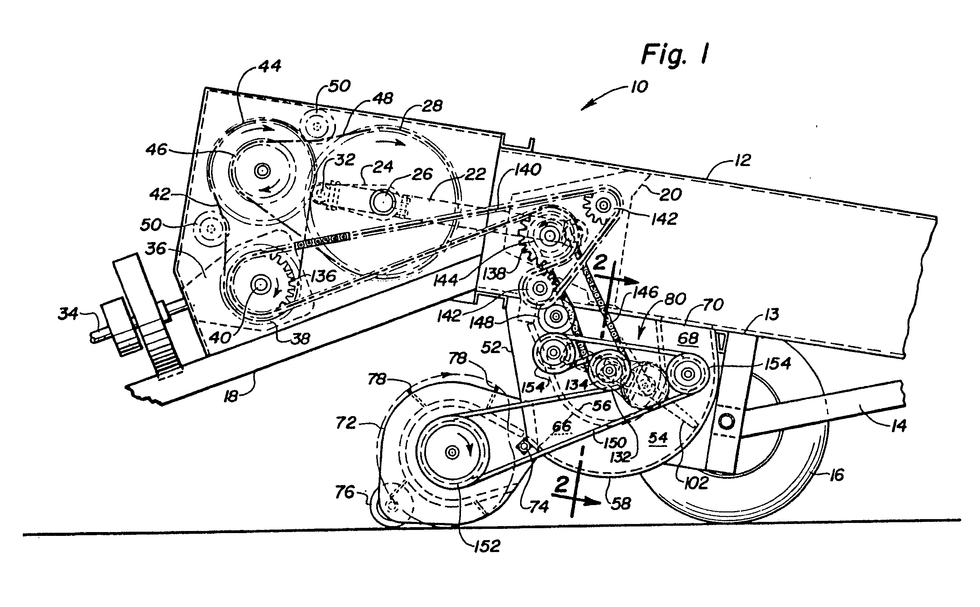

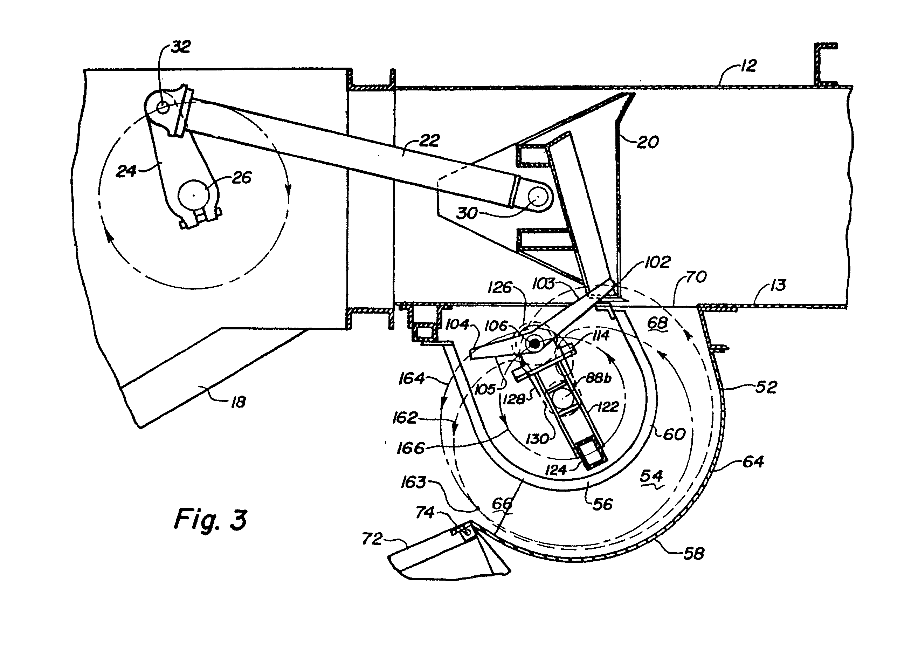

Referring to Fig. 1, a baler 10 includes a bale case 12 mounted on a frame 14 which is supported by wheels 16. A tongue 18 extends forwardly from the bale case 12 for attachment to a tractor (not shown). A plunger 20 is reciprocably disposed in the bale case 12 to form crop material into rectangular bales. The plunger 20 is attached by a connecting rod 22 to a crank arm 24 fixed to a shaft 26 on which a sprocket 28 is fixedly mounted. As best shown in Fig. 3, the connecting rod 22 has a pivotal connection 30 at one end with the plunger 20 and another pivotal connection 32 at the other end with the crank arm 24.

A drive shaft 34 is connected at one end to a gearbox 36 carried on the baler 10 and is adapted for connection at the other end to the PTO of a tractor (not shown). The drive shaft 34 causes clockwise rotation, as viewed in Fig. 1, of a sprocket 38 which is fixed to the output shaft 40 of the gearbox 36. The sprocket 38 is connected via a chain 42 to a sprocket 44 of larger diameter. A sprocket 46 is fixed to rotate with the sprocket 44. This arrangement of sprockets provides a speed reduction from the sprocket 38 to the sprocket 46. A chain 48 connects the sprocket 46 to the sprocket 28 to cause clockwise rotation of the sprocket 28, as viewed in Fig. 1 in order to cause reciprocation of the plunger 20 in a fore-and-aft direction in the bale case 12. Idlers 50 are provided to maintain proper tension in the chains 42 and 48.

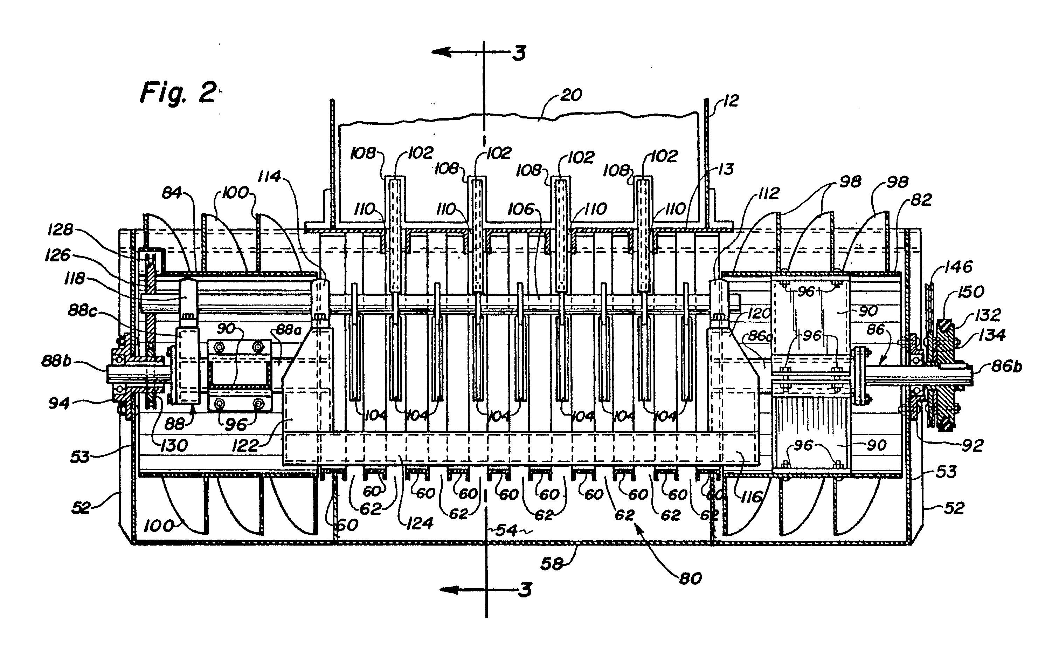

A feed chamber 52 is mounted underneath the bale case 12 and includes a curved duct 54 having top and bottom or inner and outer walls 56 and 58, respectively, and sidewalls. As shown in Fig. 2, the top or inner wall 56 is formed of a series of curved channel members 60, of inverted generally U-shaped cross-section,which are arranged side-by-side so that there are slots 62 defined between adjacent channel members 60. The bottom or outer wall 58 is formed primarily of a single curved, continuous panel member 64 as seen in cross-section in Fig. 3. The curved duct 54 is open at its lower end 66 defining a feed duct mouth and at its upper end 68, and communicates at its upper end 68 with an inlet opening 70 formed in the bottom wall 13 of the bale case 12. As can be seen in Fig. 3, the feed duct 54 in the preferred embodiment of the baler according to the invention has a length which is slightly greater than the vertical dimension of the bale case 12. A pickup device 72 of a conventional type is pivotally connected at 74 to the feed chamber 52 and is supported by wheels 76. The pickup device 72 includes a plurality of fingers 78 which are rotatable in the direction indicated in Fig. 1 for lifting crop material from the ground and delivering it toward the feed chamber 52.

A feeder mechanism 80 is provided in the feed chamber 52 for moving crop material toward the lower end 66 of the duct 54, then through the duct 54 from its lower end 66 to its upper end 68, and then into the bale case 12 through the inlet opening 70 in the bottom wall 13 thereof. Referring now to Fig. 2, it will be seen that the feeder mechanism 80 includes augers 82 and 84 mounted on beam portions 86a and 88a of shaft assemblies 86 and 88, respectively, by spider type brackets 90. These beam portions 86a,88a are preferably of generally square cross-section and the brackets 90 are clamped thereto. Stub shaft portions 86b,88b of the shaft assemblies 86,88 are rotatably mounted in bearing members 92,94 which are secured to the sidewalls 53 of the feed chamber 52. The beam portion 86a and the stub shaft portion 86b of the shaft assembly 86 are rigidly connected together. Likewise, the beam portion 88a and the stub shaft portion 88b of the shaft assembly 88 are also rigidly connected together. The brackets 90 are detachably connected to the augers 82,84 and to the shaft assemblies 86,88 by using conventional fasteners such as bolts 96 to permit removal of the augers 82,84 in sections, if desired, to facilitate servicing of the feeder mechanism 80. The augers 82,84 have the flightings 98,100 thereof arranged to move crop material from the outer regions of the feed chamber 52 inwardly toward the lower end 66 of the duct 54.

The feeder mechanism 80 also includes two sets of feeder elements or tines 102,104 fixed to a shaft 106 as best seen in Fig. 2 with the tines 102,104 arranged to project through the slots 62 in the top wall 56 of the duct 54. The tines 102 are preferably longer than the tines 104. Only the tines 102, and not the tines 104, will pass through slots 108 formed in the plunger 20 and through slots 110 formed in the bottom wall 13 of the bale case 12. Preferably, the number of tines 104 is about twice the number of tines 102. Alternatively, however, either the tines 104 located directly opposite the tines 102 or the tines 104 located between adjacent tines 102 may be eliminated. The shaft 106 is rotatably mounted in bearing blocks 112,114 which are secured to a substantially U-shaped frame 116. The shaft 106 is also rotatably mounted in a bearing block 118 which is secured to a hub portion 88c of the shaft assembly 88. The frame 116 includes two leg portions 120,122 which are rigidly connected such as by welding to the beam portions 86a,88a of the shaft assemblies 86,88. The frame 116 also includes a bight portion 124 extending between and rigidly connected at its ends to the leg portions 120,122. A sprocket 126 fixed to the shaft 106 is connected by a chain 128 to a sprocket 130 fixed on the bearing member 94. The sprocket 126 has twice as many teeth as the sprocket 130. During operation of the feeder mechanism 80, the sprocket 130 remains stationary but the sprocket 126 and the shaft 106 orbit about the sprocket 130 in one direction which causes the shaft 106 to rotate in the opposite direction in and relative to the bearing blocks 112,114,118. A sheave 132 is fixed to the stub shaft portion 86b of the shaft assembly 86, and a sprocket 134 is fixed to the sheave 132.

Referring now to Fig. 1, a sprocket 136 fixed to rotate with the sprocket 38 is connected to a sprocket 138 mounted on the side of the bale case 12 by a chain 140 in a backwrap manner to cause rotation of the sprocket 138 in a counterclockwise direction as indicated. The chain 140 also extends around idlers 142. Another sprocket 144 fixed to rotate with the sprocket 138 is connected by a chain 146 to the sprocket 134 to cause counterclockwise rotation of the sprocket 134 and thus operation of the feeder mechanism 80. An idler 148 maintains tension in the chain 140. A belt 150 extends around the sheave 132 in a backwrap manner and around another sheave 152 on the pickup device 72 to rotate the sheave 152 in a clockwise direction and thus operate the pickup device 72. The belt 150 also extends around idlers 154, the forward one of which is preferably spring loaded to allow vertical movement of the pickup device 72 and to allow the belt 150 to slip if the pickup device is overloaded.

Referring to Fig. 3, it will be seen that the sets of tines 102 and 104 are mounted on the shaft 106 so that there is an obtuse angle between the leading edges 103 of the tines 102 and the leading edges 105 of the tines 104 when measured in a counterclockwise direction from the tines 102 to the tines 104. This obtuse angle is preferably in the range of 150° to 170°. In a preferred embodiment, this angle is 157.5°. As the feeder mechanism 80 operates, the sets of tines 102,104 are each rotated in a counterclockwise direction about the axis extending longitudinally through the shaft assemblies 86,88 and simultaneously in a clockwise direction about the axis extending through the centers of the bearing blocks 112,114,118. This causes the outer ends of the tines 102 to follow a path of movement designated 162 and the outer ends of the tines 104 to follow a path of movement designated 164. These paths of movement 162,164 are offset relative to each other but they intersect at a point 163 located adjacent the lower end 66 of the duct 54. Only the path of movement 162 passes through the bale case 12. The paths of movement 162,164 are generally apple-shaped because the sprocket 126 driving the tines 102,104 orbits about the stationary sprocket 130 via the chain 128 and has twice as many teeth as the sprocket 130. For two complete revolutions as viewed in Fig. 3, i.e., 720° of rotation, of the sprocket 126 and the shaft 106 about the sprocket 130 in a counterclockwise direction, the sprocket 126 and the shaft 106 make one complete revolution, i.e., 360° of rotation, in a clockwise direction relative to the bearing blocks 112,114,118. The axis of the shaft 106 follows a path of movement 166 which is circular in shape. The center of rotation for the paths of movement 162,164,166 coincides with the axis extending longitudinally through the shaft assemblies 86,88. During the operation of the feeder mechanism 80, the frame 116 is also rotated and the weight of the bight portion 124 thereof serves to counterbalance the weight of the tines 102,104 and the weight of the shaft 106.

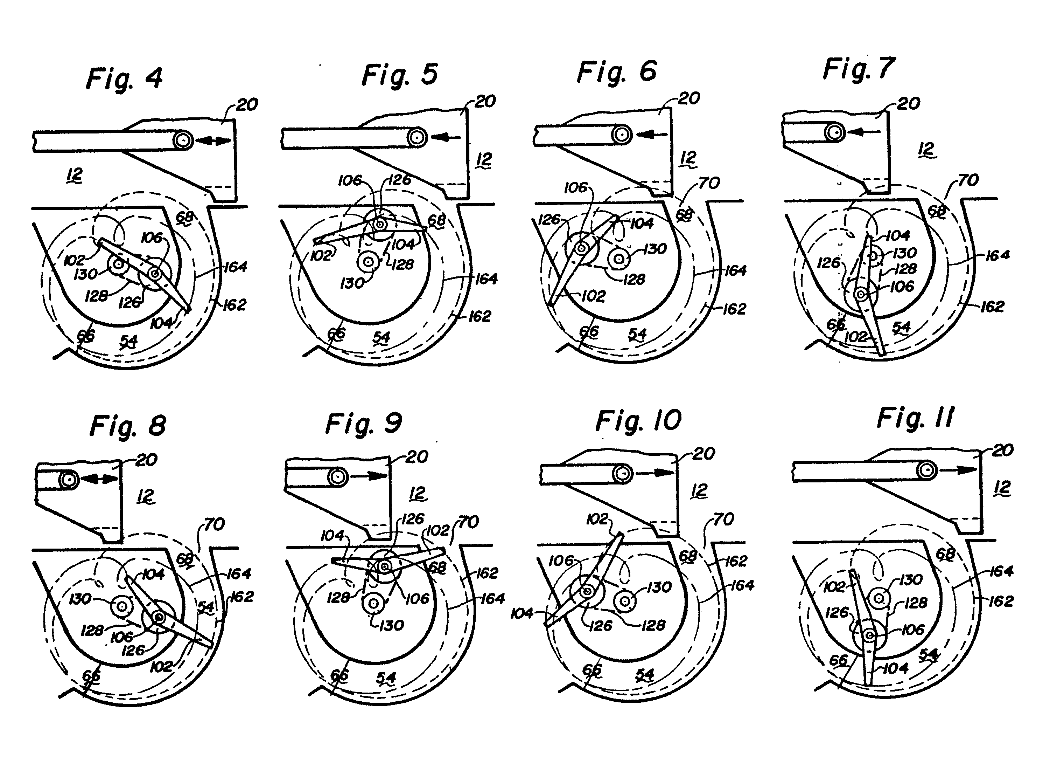

The operation of the feeder mechanism 80 is best understood from Figs. 4-11. The plunger 20 is shown in Fig. 4 at the end of its rearward movement in the bale case 12, and the tines 104 are shown projecting into the duct 54 to pack crop material therein while the tines 102 are in an inoperative position. In Fig. 5, the plunger 20 is starting to move forward in the bale case 12, i.e. to retract and the tines 104 are completing the packing of crop material into the duct 54 while the tines 102 are still in an inoperative position. The plunger 20 continues its forward movement in Fig. 6, and the tines 102 start to move into the lower end 66 of the duct 54 while that the tines 104 are now located in an inoperative position. In Fig. 7, the plunger 20 continues to move forward and the tines 102 project into the duct 54 engaging the crop material previously packed therein by the tines 104 as well as any new material entering the duct 54. The plunger 20 completes its forward or retracting movement in Fig. 8, and the tines 102 continue to move through the duct 54 toward its upper end 68 thereby precompressing the material in the duct 54. In Fig. 9, the plunger 20 begins to move rearward in the bale case 12 i.e. the plunger 20 begins its compacting stroke. The tines 102 stuff material upwardly from the duct 54 into the bale case 12 through the inlet opening 70 in the bottom wall 13 thereof. As the plunger 20 moves rearwardly from the position shown in Fig. 9 to the position shown in Fig. 10, the tines 102 pass through the slots 108 in plunger 20 and through the slots 110 in the bottom wall 13 of the bale case 12. This combs off the tines 102 as they retract from the bale case 12. In Fig. 11, the plunger 20 continues its rearward movement to compress the material delivered to the bale case 12 into a bale, and the tines 104 start to pack new material into the duct 54 again, without however stuffing this material in the bale case 12. This stuffing is done solely by the tines 102.

It will be understood that in the preferred embodiment of the baler 10 disclosed herein, the feeder mechanism 80 is driven twice the speed of the plunger 20 which causes one packing stroke by the tines 104 and one stuffing stroke by the tines 102 for each complete stroke of the plunger 20. However, the baler 10 could be modified so that there would be, for example, two packing strokes by the tines 104 and two stuffing strokes by the tines 102 for each stroke of the plunger 20. This modification could be accomplished by simply increasing the length of the crank arm 24 which would thereby increase the length of the stroke of the plunger 20 and by driving the feeder mechanism 80 four times the speed of the plunger 20.

From what precedes, it will be seen that a simple and compact feeder mechanism is provided which nevertheless is particularly useful on a so-called large rectangular baler of the type as specified. While that basically a single, though combined, feeder mechanism with associated drive means is provided, the structure according to the invention nevertheless provides during operation, distinct packing and stuffing strokes, which helps to improve the crop feeding characteristics. Furthermore, the feeder means according to the invention has fewer components and the feeder duct is shorter than is conventional on the type of balers for which the structure according to the invention is intended in the first place. This feeder mechanism also provides, during operation, pre-compression of the crop material in the feeder duct, as is desirable.

The combined packer and stuffer means of the feeder mechanism according to the invention, are of the rotary type which guarantee a smooth and continuous operation thus avoiding the joltingly type of operation of some of the prior art structures. Finally, while that the subject invention is primarily intended for use on so-called large rectangular balers, it also advantageously may be used on the conventional (smaller) rectangular balers for increasing the capacity thereof.

## Claims

1. An agricultural baler (10) comprising :
   - a bale case (12) extending fore-and-aft with respect to the intended direction of movement of the baler (10) and having a generally rectangular cross section defined by a top wall, a bottom wall (13) and transversely opposite side walls; the bottom wall (13) having a generally downwardly facing inlet opening (70) formed therein;
   - a plunger (20) mounted for reciprocational movement back-and-forth across the inlet opening (70) within the bale case (12) for compressing successive charges of crop material received therein through said inlet opening (70) to form a bale;
   - a curved feed duct (54) of a generally rectangular cross section delimited by transversely spaced apart side walls and transversely extending, spaced apart inner and outer curved walls (56, 58); said feed duct (54) communicating at its upper end with the inlet opening (70) in the bale case (12) and curving downwardly and forwardly therefrom and terminating in a lower, forwardly facing, open crop receiving mouth (66) and said feed duct (54) further having a width which generally corresponds to the width of the bale case (12) and a length which is at least as great as the dimension of the bale case (12) between the top wall and the bottom wall (13) thereof,
   - a pick-up device (72) of a width exceeding the width of the bale case (12) and the feed duct (54) and positioned forwardly of the feed duct mouth (66) for picking up crop material from the ground as the baler (10) moves forwardly in a crop field;
   - a pair of laterally spaced apart conveyors (82, 84) positioned rearwardly of the pick-up device (72) at locations laterally outboard of the lateral confines of the feed duct mouth (66) and inwardly terminating adjacent said lateral confines of the feed duct mouth (66); said conveyors (82, 84) defining a deposit zone therebetween and immediately in front of the feed duct mouth (66) and being adapted to receive picked up crop material at said laterally outboard locations from the pick-up device (72) and to converge the same inwardly to said deposit zone aligned fore-and-aft with the feed duct mouth (66); and
   - feed means (80) including a set of crop engaging feeder tines (102) disposed at spaced apart locations across the transverse width of the feed duct (54); said feeder tines (102), in use, being generally rotatable around an axis (86, 88) positioned generally forwardly of the bale case inlet opening (70) at a location between the bale case bottom wall (13) and the level of the feed duct mouth (66) and penetrating into the feed duct (54) through slots (62) provided in the inner wall thereof and being cooperable with the feed duct (54) for stuffing successive charges of crop material from the feed duct (54) into the bale case (12) in timed sequence to the reciprocation of the plunger (20) and said feeder tines (102), in use, turning through 360° of revolution along a course (162) passing :
     . downwardly through the deposit zone, into the feed duct mouth (66), rearwardly and upwardly through the feed duct (54) and up into the bale case (12) for stuffing a charge of crop material into said bale case (12) and
     . back to the deposit zone and the feed duct mouth (66) for attacking a next charge of crop material, and
   characterized in that :
   the course (162) of the feeder tines (102) extends through the deposit zone into the vicinity of the pick-up device (72) for said feeder tines (102) to receive on the one hand, directly from said pick-up device (72) and without the intermediary of any further feed means, crop material picked up by said pick-up device (72) at a location laterally inboard of the lateral confines of the feed duct mouth (66) and, on the other hand, directly from the transverse conveyors (82, 84) and again without the intermediary of any further feed means, crop material deposited by said conveyors (82, 84) within the deposit zone.

2. A baler (10) according to claim 1, characterized in that :
   - the feeder tines also are rotatable around a further axis (106) which is offset relative to the first axis (86, 88); and
   - generally stationary means (130) co-axial with the first axis (86, 88) and means (128, 126) drivingly coupling the feeder tines (102) to the generally stationary means (130), are provided; the arrangement being such that, as the feeder tines (102) are rotated around the first axis (86, 88) and around the stationary means (130) co-axial therewith, in one direction, the means (128, 126) drivingly coupling the feeder tines (102) to the stationary means (130) cause the feeder tines (102) to rotate in the opposite direction around the further axis (106).

3.  A baler (10) according to claim 2, characterized in that the transmission ratio of the means (128, 126) drivingly coupling the feeder tines (102) to the generally stationary means (130) is such that for a given angular displacement of the feeder tines (102) in the one direction around the first axis (86, 88), the feeder tines (102) are angularly displaced in the opposite direction around the further axis (106) through an angle corresponding to half the given angular displacement around the first axis (86, 88); the arrangement being such that the feeder tines (102) make a resultant movement generally in the one direction along said course (162).

4.  A baler (10) according to claim 3, characterized in that the feed means (80) further also comprises :
    -  a pair of transversely spaced apart shaft assemblies (86, 88) which are aligned to each other and which extend co-axially with the first axis;
    -  a crank means (120, 122) coupled at one end to each of the shaft assemblies (86, 88) at the end thereof facing the opposite shaft assembly (88, resp. 86); and
    -  a shaft means (106) supported by the crank means (120, 122) at the other ends thereof and co-axially with the further axis; the shaft means (106) supporting the feeder tines (102) in a manner so as to be rotatable around the further axis.

5.  A baler (10) according to claim 4, characterized in that :
    -  the shaft means (106) are rotatably mounted on the crank means (120, 122) with the feeder tines (102) being fixedly coupled to said shaft means (106);
    -  the generally stationary means (130) are formed by a first sprocket fixedly secured to the frame (14);
    -  the means (128, 126) drivingly coupling the feeder tines (102) to the generally stationary means (130) are formed by a further sprocket (126) fixedly secured to the shaft means (106) and a chain (128) drivingly extending around the first and further sprockets (130, 126); the further sprocket (126) having twice as many teeth as the first sprocket (130); and
    -  drive means (34, 36, 136, 140, 138, 144, 146, 134) are operatively coupled to one of the shaft assemblies (86) for driving the feed means (80) in the first direction around the first axis (86, 88).

6.  A baler (10) according to claim 4 or 5, characterized in that a generally U-shaped counterbalancing member (116) is fixedly connected to the shaft assemblies (86, 88) at a position generally diametrically opposite to the shaft means (106) to counterbalance the feeder tines (102) and the shaft means (106).

7.  A baler (10) according to any of the claims 3 to 6, characterized in that the feed duct (54) is generally circularly curved in shape with the center of curvature being either coincident with the first axis (86, 88) or positioned proximate thereto; the path of the feeder tines (102) through the deposit zone, the feed duct mouth (66), the feed duct (54) and the bale case (12) being part of a generally apple-shaped course of movement.

8.  A baler (10) according to any of the preceding claims characterized in that the feeder tines (102) serve to precompress crop material in the feed duct (54) prior to stuffing a charge of crop material from the feed duct (54) into the bale case (12).

9.  A baler (10) according to any of the preceding claims, characterized in that each conveyor is in the form of an auger (82, 84).

10. A baler (10) according to claim 9 when appended to claim 4, characterized in that the augers (82, 84) are connected to the shaft assemblies (86, 88) for rotation in unison therewith.

11. A baler (10) according to any of the preceding claims, characterized in that the single rotary feeder structure (102, 104, 86, 88, 120, 122, 124, 106) comprises a further set of crop-engaging feeder tines (104) which, in operation, also turns through 360° of revolution along a course (164) passing :
    -  downwardly through the deposit zone, into the feed duct mouth (66) and rearwardly and up through the feed duct (54) for transferring crop material from the deposit zone and the feed duct mouth (66) into the feed duct (54); and
    -  back down to the deposit zone and the feed duct mouth (66) for attacking a next amount of crop material.

## Revendications

1. Ramasseuse-presse agricole (10) comportant:
   - une cage à balles (12) qui s'étend longitudinalement par rapport au sens de déplacement prévu de la ramasseuse-presse (10) et possède une section transversale, dans l'ensemble, rectangulaire définie par une paroi supérieure, une paroi inférieure (13) et des parois latérales opposées transversalement; la paroi inférieure (13) comportant, ménagé en elle, un orifice d'entrée (70) tourné, d'une manière générale, vers le bas;
   - un piston (20) monté en vue d'opérer un mouvement alternatif de va-et-vient transversalement à l'orifice d'entrée (70), à l'intérieur de la cage à balles (12), pour comprimer des charges de produits de récolte successives admises à l'intérieur de celle-ci par ledit orifice d'entrée (70), afin de former une balle;
   - un conduit d'alimentation courbé (54) présentant une section transversale, dans l'ensemble, rectangulaire et délimité par des parois latérales espacées l'une de l'autre transversalement et par des parois courbées intérieure et extérieure espacées l'une de l'autre qui s'étendent transversalenent (56, 59); conduit d'alimentation (54) qui communique, au niveau de son extrémité supérieure, avec l'orifice d'entrée (70) dans la cage à balles (12) et s'incurve vers le bas et vers l'avant depuis celui-ci pour se terminer par une entrée inférieure de réception de récolte (66) ouverte et tournée vers l'avant, et ayant, en outre, une largeur qui correspond, dans l'ensemble, à celle de la cage à balles (12), et une longueur qui est au moins égale à la dimension de la cave à balles (12) entre sa paroi supérieure et sa paroi inférieure (13);
   - un dispositif de ramassage (72) ayant une largeur supérieure à celle de la cage à balles (12) et du conduit d'alimentation (54) et placé à l'avant de l'entrée (66) du conduit d'alimentation pour ramasser des produits de récolte à partir du sol au fur et à mesure que la ramasseuse-presse (10) avance dans un champ de récolte;
   - deux transporteurs espacés l'un de l'autre latéralement (82, 84) positionnés à l'arrière du dispositif de ramassage (72) en des points situés latéralement à l'extérieur des limites latérales de l'entrée (66) du conduit d'alimentation, et se terminant vers l'intérieur à proximité desdites limites latérales de l'entrée (66) du conduit d'alimentation; lesdits transporteurs (82, 84) définissant une zone de dépôt entre eux et immédiatement devant l'entrée (66) du conduit d'alimentation, et étant adaptés pour recevoir du dispositif de ramassage (72) les produits de récolte ramassés, au niveau desdits points situés latéralement à l'extérieur, et pour les faire converger vers l'intérieur en direction de ladite zone de dépôt alignée longitudinalement avec l'entrée (66) du conduit d'alimentation; et
   - des moyens d'alimentation (80) comportant une série de fourches d'alimentation (102) venant en prise avec la récolte, qui sont disposées en des points espacés les uns des autres sur la largeur transversale du conduit d'alimentation (54); lesdites fourches d'alimentation (102) étant, en service, sensiblement mobiles en rotation autour d'un axe (86, 88) situé, d'une manière générale, à l'avant de l'orifice d'entrée (70) de la cage à balles, en un point situé entre la paroi inférieure (13) de la cage à balles et le niveau de l'entrée (66) du conduit d'alimentation, et pénètrant dans le conduit d'alimentation (54) à travers des fentes (62) ménagées dans la paroi intérieure de celui-ci, tout en étant aptes à coopérer avec le conduit d'alimentation (54) pour bourrer les charges de produits de récolte successives dans la cave à balles (12) depuis le conduit d'alimentation (54), suivant une séquence synchronisée avec le mouvement alternatif du piston (20), et lesdites fourches d'alimentation (102) effectuant, en service, une rotation sur 360° suivant une course (162) qui:
     . passe, vers le bas, à travers la zone de dépôt, dans l'entrée (66) du conduit d'alimentation, vers l'arrière et vers le haut, à travers le conduit d'alimentation (54) pour remonter dans la cave à balles (12), afin de bourrer une charge de produits de récolte dans cette dernière, et
     . revient à la zone de dépôt et à l'entrée (66) du conduit d'alimentation, afin d'attaquer une charge de produits de récolte suivante, et
   caractérisée en ce que:
   - la course (162) des fourches d'alimentation (102) s'étend à travers la zone de dépôt jusqu'au voisinage du dispositif de ramassage (72) pour que lesdites fourches d'alimentation (102) reçoivent, d'une part, des produits de récolte ramassés par ledit dispositif de ramassage (72), directement de ce dernier et sans l'intervention d'aucun autre moyen d'alimentation, en un point situé latéralement à l'intérieur des limites latérales de l'entrée (66) du conduit d'alimentation, et, d'autre part, des produits de récolte déposés par les transporteurs transversaux (82, 84) à l'intérieur de la zone de dépôt, directement de ces derniers et, là encore, sans l'intervention d'aucun autre moyen d'alimentation.

2. Ramasseuse-presse (10) selon la revendication 1, caractérisée en ce que:
   - les fourches d'alimentation (102) sont également mobiles en rotation autour d'un second axe (106) décalé par rapport au premier axe (86, 88); et
   - il est prévu un moyen sensiblement fixe (130) coaxial au premier axe (86, 88) et des moyens (128, 126) qui accouplent dans une relation d'entraînement les fourches d'alimentation (102) avec le moyen sensiblement fixe (130); la disposition étant telle que, lorsque les fourches d'alimentation (102) sont animées d'un mouvement de rotation, dans un sens, autour du premier axe (86, 88) et du moyen sensiblement fixe (130) coaxial à celui-ci, les moyens (126, 128) qui accouplent dans une relation d'entraînement les fourches d'alimentation (102) avec le moyen sensiblement fixe (130), obligent lesdites fourches d'alimentation (102) à tourner dans le sens opposé autour du second axe (106).

3. Ramasseuse-presse (10) selon la revendication 2, caractérisée en ce que le rapport de transmission des moyens (126, 128) qui accouplent dans une relation d'entraînement les fourches d'alimentation (102) avec le moyen sensiblement fixe (130) est tel que, pour un déplacement angulaire donné des fourches d'alimentation (102) dans ledit sens autour du premier axe (86, 88), les fourches d'alimentation (102) sont déplacées angulairement dans le sens opposé autour du second axe (106) suivant un angle qui correspond à la moitié du déplacement angulaire donné autour du premier axe (86, 88); la disposition est telle que les fourches d'alimentation (102) effectuent un mouvement résultant sensiblement dans ledit sens, le long de ladite course (162).

4. Ramasseuse-presse (10) selon la revendication 3, caractérisée en ce que les moyens d'alimentation (80) comportent également:
   - deux ensembles d'arbres (86, 88) espacés l'un de l'autre transversalement et en alignement l'un avec l'autre, qui s'étendent coaxialement au premier axe;
   - des moyens formant manivelles (129, 122) respectivement accouplés, au niveau de l'une de leurs extrémités, avec chacun des ensembles d'arbres (86, 88), au niveau de l'extrémité de ceux-ci tournée vers l'ensemble d'arbres (88, resp. 86) opposé; et
   - un moyen formant arbre (106) supporté par les moyens formant manivelles (120, 122), au niveau des autres extrémités de ceux-ci, et coaxialement au second axe; le moyen formant arbre (106) portant les fourches d'alimentation (102) de façon qu'elles soient mobiles en rotation autour du second axe.

5. Ramasseuse-presse (10) selon la revendication 4, caractérisée en ce que:
   - le moyen formant arbre (106) est monté mobile en rotation sur les moyens formant manivelles (120, 122), les fourches d'alimentation (102) étant accouplées d'une manière fixe avec lui;
   - le moyen sensiblement fixe (130) consiste en un premier pignon assujetti d'une manière fixe au châssis (14);
   - les moyens (128, 126) qui accouplent dans une relation d'entraînement les fourches d'alimentation (102) avec le moyen sensiblement fixe (130), consistent en un second pignon (126) assujetti d'une manière fixe au moyen formant arbre (106), et en une chaîne (128) qui s'étend dans une relation d'entraînement autour des premier et second pignons (130, 126); le second pignon (126) possédant deux fois plus de dents que le premier pignon (139); et
   - des moyens d'entraînement (34, 36, 136, 140, 138, 144, 146, 134) accouplés d'une manière fonctionnelle avec l'un (86) des ensembles d'arbres, en vue d'entraîner les moyens d'alimentation (80) dans le premier sens autour du premier axe (86, 88).

6. Ramasseuse-presse (10) selon la revendication 4 ou 5, caractérisée en ce qu'il est prévu un organe d'équilibrage sensiblement en forme de U (116) relié d'une manière fixe aux ensembles d'arbres (86, 88) en un point, dans l'ensemble, diamétralement opposé au moyen formant arbre (106), pour faire contrepoids aux fourches d'alimentation (102) et au moyen formant arbre (106).

7. Ramasseuse-presse (10) selon l'une quelconque des revendications 3 à 6, caractérisée en ce que le conduit d'alimentation (54) présente une forme courbée d'une manière sensiblement circulaire, le centre de courbure coïncidant avec le premier axe (86, 88) ou étant positionné à proximité de celui-ci; la trajectoire des fourches d'alimentation (102) à travers la zone de dépôt, l'entrée (66) du conduit d'alimentation, le conduit d'alimentation (54) et la cage à balles (12), faisant partie d'une course de déplacement sensiblement en forme de pomme.

8. Ramasseuse-presse (10) selon l'une quelconque des revendications précédentes, caractérisée en ce que les fourches d'alimentation (102) servent à précomprimer les produits de récolte dans le conduit d'alimentation (54) avant de bourrer une charge de produits de récolte dans la cage à balles (12) à partir du conduit d'alimentation (54).

9. Ramasseuse-presse (10) selon l'une quelconque des revendications précédentes, caractérisée en ce que chacun des transporteurs se présente sous la forme d'une vis transporteuse (82, 84).

10. Ramasseuse-presse (10) selon la revendication 9, lorsqu'elle est dépendante de la revendication 4, caractérisée en ce que les vis transporteuses (82, 84) sont accouplées avec les ensembles d'arbres (86, 88) en vue de tourner en synchronisme avec eux.

11. Ramasseuse-presse (10) selon l'une quelconque des revendications précédentes, caractérisée en ce que la structure d'alimentation rotative unique (102, 104, 86, 88, 120, 122, 124, 106) comporte une seconde série de fourches d'alimentation (104) venant en prise avec la récolte, qui, en fonctionnement, effectuent elles aussi une rotation sur 360° le long d'une course (164) qui:
   - passe, vers le bas, à travers la zone de dépôt, dans l'entrée (66) du conduit d'alimentation et vers l'arrière pour remonter à travers le conduit d'alimentation (54), afin de transférer les produits de récolte depuis la zone de dépôt et l'entrée (66) du conduit d'alimentation dans le conduit d'alimentation (54); et
   - descend pour revenir à la zone de dépôt et à l'entrée (66) du conduit d'alimentation, afin d'attaquer une quantité de produits de récolte suivante.

## Ansprüche

1. Landwirtschaftliche Ballenpresse (10) mit:
   - einer Ballenkammer (12), die sich in Längsrichtung bezüglich der beabsichtigten Bewegungsrichtung der Ballenpresse (10) erstreckt und einen allgemein rechteckigen Querschnitt aufweist, der durch eine Deckwand, eine Bodenwand (13) und in Querrichtung gegenüberliegende Seitenwände definiert ist, wobei die Bodenwand (13) eine darin ausgebildete, allgemein nach unten gerichtete Einlaßöffnung (70) aufweist;
   - einem Preßkolben (20), der für eine Hin- und Herbewegung in Rückwärts- und Vorwärtsrichtung über die Einlaßöffnung (70) in der Ballenkammer (12) hinweg befestigt ist, um aufeinanderfolgende Ladungen von Erntematerial zu komprimieren, die die Ballenkammer über die Einlaßöffnung (70) empfängt, um einen Ballen zu bilden;
   - einem gekrümmten Zuführungskanal (54) mit allgemein rechteckigem Querschnitt, der durch in Querrichtung mit Abstand angeordnete Seitenwände und sich in Querrichtung erstreckende, mit Abstand angeordnete innere und äußere gekrümmte Wände (56, 58) umgrenzt ist, wobei der Zuführungskanal (54) an seinem oberen Ende mit der Einlaßöffnung (70) in der Ballenkammer (12) in Verbindung steht und hiervon ausgehend nach unten und nach vorne gekrümmt ist und in einer unteren, nach vorne gerichteten offenen Erntematerial aufnehmenden Mündung (66) endet und wobei der Zuführungskanal (54) weiterhin eine Breite, die allgemein der Breite der Ballenkammer (12) entspricht, und eine Länge aufweist, die zumindestens so groß ist, wie die Abmessung der Ballenkammer (12) zwischen deren Deckwand und deren Bodenwand (13);
   - einer Aufnehmereinrichtung (72), deren Breite die Breite der Ballenkammer (12) und des Zuführungskanals (54) übersteigt und die vor der Mündung (66) des Zuführungskanals angeordnet ist, um Erntematerial von dem Boden aufzunehmen, während sich die Ballenpresse (10) in Vorwärtsrichtung auf einem Erntefeld bewegt;

- einem Paar von mit seitlichem Abstand angeordneten Fördereinrichtungen (82, 84), die hinter der Aufnehmereinrichtung (72) an Stellen seitlich außerhalb der seitlichen Begrenzungen der Zuführungskanal-Mündung (66) angeordnet sind und auf der Innenseite benachbart zu den seitlichen Begrenzungen der Zuführungskanal-Mündung (66) enden, wobei die Fördereinrichtungen (82, 84) zwischen sich und unmittelbar vor der Zuführungskanal-Mündung (66) einen Ablagebereich bilden und so ausgebildet sind, daß sie aufgenommenes Erntematerial an den seitlich außenliegenden Stellen von der Aufnehmereinrichtung (72) aufnehmen und dieses Erntematerial nach innen zu dem Ablagebereich zusammenführen, der in Längsrichtung mit der Zuführungskanal-Mündung (66) ausgerichtet ist, und

- Zuführungseinrichtungen (80), die einen Satz von mit dem Erntematerial in Eingriff kommenden Zuführungszinken (102) einschließen, die an mit Abstand voneinander angeordneten Stellen über die Querbreite des Zuführungskanals (54) angeordnet sind, wobei die Zuführungszinken (102) im Gebrauch allgemein um eine Achse (86, 88) drehbar sind, die allgemein vor der Ballenkammer-Einlaßöffnung (70) an einer Stelle zwischen der Ballenkammer-Bodenwand (13) und der Höhenlage der Zuführungskanal-Mündung (66) angeordnet ist wobei die Zuführungszinken in den Zuführungskanal (54) über in dessen Innenwand angeordnete Schlitze (62) eintreten und mit dem Zuführungskanal (54) zusammenwirken, um aufeinanderfolgende Ladungen des Erntematerials von dem Zuführungskanal (54) in die Ballenkammer (12) in zeitlich gesteuerter Folge zur Hin- und Herbewegung des Preßkolbens (20) zu stopfen, und wobei sich die Zuführungszinken (102) in Betrieb über 360° einer Umdrehung entlang einer Bahn 162 drehen, die:

    . nach unten durch den Ablagebereich in die Zuführungskanal-Mündung (66), nach hinten und nach oben durch den Zuführungskanal (54) und aufwärts in die Ballenkammer (12) verläuft, um eine Ladung von Erntematerial in die Ballenkammer (12) zu stopfen, und

    . zurück zum Ablagebereich und zur Zuführungskanal-Mündung (66) verläuft, um die nächste Ladung des Erntematerials zu erfassen,

dadurch **gekennzeichnet, daß:**

sich die Bahn (162) der Zuführungszinhen (102) durch den Ablagebereich in die Nähe der Aufnehmereinrichtung (72) erstreckt, damit die Zuführungszinken (102) einerseits direkt von der Aufnehmereinrichtung (72) und ohne die Zwischenschaltung irgendwelcher weiterer Zuführungseinrichtungen Erntematerial aufnehmen, das von der Aufnehmereinrichtung (72) an einer Stelle seitlich innerhalb der seitlichen Begrenzungen der Zuführungskanal-Mündung (66) aufgenommen wird, und andererseits direkt von den Querförderern (82, 84) und wiederum ohne Zwischenschaltung irgendwelcher weiterer Zuführungseinrichtungen Erntematerial empfangen, das von den Fördereinrichtungen (82, 84) innerhalb des Ablagebereichs abgelegt wird.

2. Ballenpresse (10) nach Anspruch 1, dadurch **gekennzeichnet,** daß:

    - die Zuführungszinken weiterhin um eine weitere Achse (106) drehbar sind, die gegenüber der ersten Achse (86, 88) versetzt ist, und

    - allgemein stationäre Einrichtungen (130) koaxial zur ersten Achse (86, 88) und Einrichtungen (128, 126) vorgesehen sind, die die Zuführungszinken (102) antriebsmäßig mit den allgemein stationären Einrichtungen (130) koppeln, wobei die Anordung derart ist, daß während die Zuführungszinken (102) um die erste Achse (86, 88) und um die hierzu koaxialen stationären Einrichtungen (130) in einer Richtung gedreht werden, die die Zuführungszinken (102) mit den stationären Einrichtungen (130) antriebsmäßig koppelnden Einrichtungen (128, 126) bewirken, daß sich die Zuführungszinken (102) in der entgegengesetzten Richtung um die weitere Achse (106) drehen.

3. Ballenpresse (10) nach Anspruch 2, dadurch **gekennzeichnet,** daß das Übersetzungsverhältnis der die Zuführungszinken (102) mit den allgemein stationären Einrichtungen (130) antriebsmäßig koppelnden Einrichtungen (128, 126) derart ist, daß für eine vorgegebene Winkelbewegung der Zuführungszinken (102) in einer Richtung um die erste Achse (86, 88) die Zuführungszinken (102) winkelmäßig in der entgegengesetzten Richtung um die weitere Achse (106) über einen Winkel bewegt werden, der der halben vorgegebenen Winkelbewegung um die erste Achse (86, 88) entspricht, wobei die Anordnung derart ist, daß die Zuführungszinken (102) eine resultierende Bewegung allgemein in einer Richtung entlang der Bahn (162) ausführen.

4. Ballenpresse (10) nach Anspruch 3, dadurch **gekennzeichnet,** daß die Zuführungseinrichtungen (80) weiterhin folgende Teile umfassen:
   - zwei mit Querabstand angeordnete Wellenbaugruppen (86, 88), die miteinander ausgerichtet sind und die sich koaxial zur ersten Achse erstrecken;
   - eine Kurbeleinrichtung (120, 122), die mit einem Ende mit jeder der Wellenbaugruppen (86, 88) an deren Ende gekoppelt ist, das auf die gegenüberliegende Wellenbaugruppe (88 bzw. 86) gerichtet ist, und
   - eine Welleneinrichtung (106), die von der Kurbeleinrichtung (120, 122) an deren anderen Ende und koaxial zur weiteren Achse gelagert ist, wobei die Welleneinrichtung (106) die Zuführungszinken (102) in einer Weise lagert, daß sie um die weitere Achse drehbar sind.

5. Ballenpresse (10) nach Anspruch 4, dadurch **gekennzeichnet, daß**
   - die Welleneinrichtungen (106) drehbar auf den Kurbeleinrichtungen (120, 122) gelagert sind, wobei die Zuführungszinken (102) fest mit den Welleneinrichtungen (106) gekoppelt sind;
   - die allgemein stationären Einrichtungen (130) durch ein erstes Kettenrad gebildet sind, das fest an dem Rahmen (14) befestigt ist;
   - die die Zuführungszinken (102) mit den allgemein stationären Einrichtungen (130) antriebsmäßig koppelnden Einrichtungen (128, 126) durch ein weiteres Kettenrad (126), das fest mit den Welleneinrichtungen (106) verbunden ist, und eine Kette (128) gebildet sind, die sich antriebsmäßig um das erste und das weitere Kettenrad (130, 126) erstreckt, wobei das weitere Kettenrad (126) doppelt so viel Zähne wie das erste Kettenrad (130) aufweist, und
   - Antriebseinrichtungen (34, 36, 136, 140, 138, 144, 146, 134) betriebsmäßig mit einer der Wellenbaugruppen (86) gekoppelt sind, um die Zuführungseinrichtungen (80) in der ersten Richtung um die erste Achse (86, 88) anzutreiben.

6. Ballenpresse (10) nach Anspruch 4 oder 5, dadurch - **gekennzeichnet,** daß ein allgemein U-förmiges Massenausgleichselement (116) fest mit den Wellenbaugruppen (86, 88) an einer Position allgemein diametral entgegengesetzt zu den Welleneinrichtungen (106) verbunden ist, um einen Massenausgleich der Zuführungszinken (102) und der Welleneinrichtungen (106) zu bewirken.

7. Ballenpresse (10) nach einem der Ansprüche 3 bis 6, dadurch **gekennzeichnet,** daß der Zuführungskanal (54) eine allgemein kreisförmig gekrümmte Form aufweist, wobei der Krümmungsmittelpunkt entweder mit der ersten Achse (86, 88) zusammenfällt oder nahe hierzu angeordnet ist, wobei die Bewegungsbahn der Zuführungszinken (102) durch den Ablagebereich, die Zuführungskanal-Mündung (66), den Zuführungskanal (54) und die Ballenkammer (12) Teil einer allgemein apfelförmigen Bewegungsbahn sind.

8. Ballenpresse (10) nach einem der vorhergehenden Ansprüche, dadurch **gekennzeichnet,** daß die Zuführungszinken (102) zur Vorkomprimierung von Erntematerial in dem Zuführungskanal (54) vor dem Stopfen einer Ladung des Erntematerials von dem Zuführungskanal (54) in die Ballenkammer (12) dienen.

9. Ballenpresse (10) nach einem der vorhergehenden Ansprüche, dadurch **gekennzeichnet,** daß jede Fördereinrichtung die Form einer Förderschnecke (82, 84) aufweist.

10. Ballenpresse (10) nach Anspruch 9 unter Rückbeziehung auf Anspruch 4, dadurch **gekennzeichnet,** daß die Förderschnecken (82, 84) mit den Wellenbaugruppen (86, 88) für eine Drehung zusammen mit diesen verbunden sind.

11. Ballenpresse (10) nach einem der vorhergehenden Ansprüche, dadurch **gekennzeichnet,** daß die einzige rotierende Zuführungsstruktur (102, 104, 86, 88, 120, 122, 124, 106) einen weiteren Satz von mit dem Erntematerial in Eingriff kommenden Zuführungszinken (104) aufweist, der sich im Betrieb ebenfalls über 360° einer Umdrehung entlang einer Bahn (164) dreht, die:
   - nach unten durch den Ablagebereich, in die Zuführungskanal-Mündung (66) und rückwärts und aufwärts durch den Zuführungskanal (54) verläuft, um Erntematerial an den Ablagebereich und der Zuführungskanal-Mündung (66) in den Zuführungskanal (54) zu überführen, und
   - sich zurück zum Ablagebereich und zur Zuführungskanal-Mündung (66) erstreckt, um eine nächste Menge von Erntematerial zu erfassen.

Fig. 1

EP 0 190 784 B1

Fig. 2

EP 0 190 784 B1

Fig. 3

Fig. 4     Fig. 5     Fig. 6     Fig. 7

Fig. 8     Fig. 9     Fig. 10     Fig. 11

EP 0 190 784 B1